# EUROPEAN PATENT APPLICATION

(11) **EP 4 779 487 A1**
(43) Date of publication of application: **22.07.2026**
(21) Application number: 25225603.7
(22) Date of filing: 19.12.2025
(51) Int. Cl.: G06F 16/22, G06F 11/34

(54) **APPROXIMATE MEMBERSHIP STRUCTURE FOR APPLICATION PERFORMANCE AND MONITORING DATA**

(30) Priority: 20.12.2024 US 202463736684 P; 04.04.2025 US 202563783547 P; 17.12.2025 US 202519422642
(71) Applicant: Dynatrace LLC, Boston, Massachusetts 02210 (US)
(72) Inventor: KRISMAYER, Thomas, Linz (AT); WIRTH, Anna, Linz (AT); MORITZ, Josef, Linz (AT)
(74) Representative: Schlegel, Sebastian

(57) **Abstract**

A computer-implemented method for storing and querying application performance monitoring (APM) data in a database, includes receiving data records of APM data, each data record associated to a key; storing the data records in storage containers in the database, each record stored in one storage container and each storage container identified by a unique storage identifier; assigning a unique index value to each unique key; defining a distribution function mapping the keys to the index values; generating a secondary function to approximate the distribution function; defining a mapping function to map the index values to lists of storage identifiers; and in response to a request to retrieve data records for a specified key or keys, querying the database to identify a list of storage identifiers based on the secondary function and the mapping function and retrieving the data records for the specified key or keys.

## Description

The present disclosure relates to the field of information technology. In particular, the disclosure relates to a computer-implemented method for storing and querying application performance monitoring (APM) data in a database.

### Background

APM data can be located in a database by creating a full index, also called indexing, for the data and using the index to locate the data in the database, or by brute force evaluation (i.e., checking every item in the data collection). A broad range of different indexing algorithms is known in the prior art such as inverted indices, tree-based or tree-like algorithms (such as B tree or LSM tree), hash-based algorithms or variations of those.

Due to the massive amount of APM data stored in databases and the quick increase of data ingest year by year, there is a need to find APM data fast and at the same time keep the size of indexes small.

This section provides background information related to the present disclosure which is not necessarily prior art.

### Summary

The objective of the disclosure is to find a computer-implemented method for storing application performance monitoring data in a database, which allows i. fast data ingest and fast storing of APM data in a database, and ii. fast querying of APM data in the database, while iii. keeping the size of an index for locating APM data in the database small.

The objective is solved by a computer-implemented method for storing application performance monitoring (APM) data in a database, as explained herein. Advantageous embodiments are described herein.

In particular, the objective is solved by a computer-implemented method for storing application performance monitoring (APM) data in a database, the computer-implemented method comprising: receiving, by a computer-processor, data records of APM data from a plurality of computing entities, where each data record is associated to a key of a plurality of keys; storing, by the computer-processor, the data records in storage containers in the database, where each record is stored in one storage container and each storage container is identified by a unique storage identifier; assigning, by the computer-processor, a unique index value of a plurality of index values to each unique key; defining, by the computer-processor, a distribution function mapping the keys to the index values, where the distribution function is represented as a set of tuples each with a corresponding key and index value; generating, by the computer-processor, a secondary function to approximate the distribution function, defining, by the computer-processor, a mapping function to map the index values to lists of storage identifiers; and in response to a request to retrieve data records for a specified key or range of keys, querying the database to identify a list of storage identifiers based on the secondary function and the mapping function and retrieving the data records for the specified key or range of keys from one or more storage containers identified in the list of storage identifiers.

In a database, records of APM data are typically stored in database segments, where each database segment comprises multiple storage containers (also referred to as data batches, buckets or simply containers). Each database segment has an index which is used to locate records of APM data stored in the database segment's storage containers. It is possible that records matching a database query are found in 0, 1 or multiple storage containers. The index is also called membership structure since it provides information whether matching records are contained in the database, and if so, in which storage containers they are located.

In various embodiments, a computer-processor receives data records of APM data from a plurality of computing entities, where each data record is associated to a key of a plurality of keys. E.g., keys can be an IP address, a date and time, a customer ID, an entity ID etc. In a second step, the data records are stored in the database comprising multiple storage containers, where each storage container is identified by a unique storage identifier. Next, the processor assigns a unique index value to each group of the data records having the same key. The assigned index values are typically incremented or decremented from group to group. After that, a distribution function is defined for mapping the keys to the index values, where the distribution function is represented as a set of tuples each with a corresponding key and index value. Next, the processor generates a secondary function to approximate the distribution function, typically with some error between the exact distribution function and the approximate secondary function. In addition, the processor defines a mapping function to map the index values to lists of storage identifiers. The mapping function can be expressed as a mapping table or a mathematical function. Finally, in response to a request to retrieve data records for a specified key or range of keys, the database is queried to identify a list of storage identifiers based on the secondary function and the mapping function, and the data records for the specified key or range of keys from one or more storage containers identified in the list of storage identifiers are retrieved from the database.

Tests performed by the applicant indicate that the disclosed method results in a significant reduction of the index size from 8 MB to 3 MB compared to the well-known Apache Lucene Index. The query speed is some 1.6 to 2.9 times faster than Lucene, where the data ingest speed is only some 3% slower than Lucene.

In a preferred embodiment, the method further comprises sorting, by the computer-processor, the data records by the keys, and grouping sets of the data records having the same key into groups of APM data; and assigning the unique index value includes assigning the unique index value to each group of APM data, where the index value is incremented between each of the groups of APM data.

Note that the list of storage identifiers may include one or multiple storage identifiers.

According to one typical scenario, data records of APM data originate at computing entities; each computing entity is identified by a unique entity identifier; and keys are entity identifiers for the computing entities.

Data records include at least one of the following: log lines, monitoring data such as span or trace data, or metric data. Further types of data are possible too.

According to another typical scenario, data records of APM data comprise metric data representing performance metrics of the computing entities; and the keys are numerical values in the metric data.

The disclosed method is, however, not limited to keys having numerical values: As any string or section of a string, also known as token, is represented as an array of byte or bit-values, also non-numerical keys are sortable, e.g., by considering the ASCII values of characters, and can thus be dealt with as if they were numerical values. Thus, the disclosed method works also for keys of APM data having sortable, non-numerical values.

In a preferred embodiment, generating the secondary function to approximate the distribution function includes generating the secondary function such that, for the keys, the index value of the distribution function at a corresponding key is given by the secondary function at said key ± a defined error.

**In** another preferred embodiment, generating the secondary function includes generating a piecewise linear spline function with multiple segments to approximate the distribution function, where the spline function approximates the distribution function by minimizing a number of spline segments of the piecewise linear spline function while maintaining the defined error. E.g., the Greedy-Spline-Corridor method may be used to generate the spline function.

The defined error is dynamically adjustable based on at least one of a desired accuracy of the approximation or a maximum number of spline points.

In yet another embodiment, generating the secondary function includes generating one linear function to approximate the distribution function with a Least-Mean-Square approximation, which minimizes the sum of squared errors for the keys between the distribution function and the linear function. Yet other options are RMI (recursive model index) and PGM (piecewise geometric model).

Typically, querying the database to identify the list of storage identifiers includes: mapping, with the secondary function, the specified key or range of keys to an approximate index value or a range of approximate index values; and mapping, with the mapping function, the approximate index value or the range of approximate index values to the list of storage identifiers.

The disclosed method allows both point- and range-queries: In the former case, the database is queried to identify the list of storage identifiers by mapping, with the secondary function, the specified key to an approximate index value and mapping, with the mapping function, the approximate index value to the list of storage identifiers. In the latter case, the database is queried to identify the list of storage identifiers by mapping, with the secondary function, the specified range of keys to a range of approximate index values and mapping, with the mapping function, the range of approximate index values to the list of storage identifiers.

The disclosed method can also be used to update the distribution function and the mapping function in response to a change in the data records.

In one embodiment, the secondary function is a piecewise linear spline function; and the method further comprises updating only a portion of the piecewise linear spline function affected by the change in the data records.

In another embodiment, the entire secondary function is updated in response to the change in the data records.

Updating the secondary function may further comprise updating a maximum allowable error between the updated distribution function and the secondary function approximating the original distribution function in response to the change in the data records.

Instead or in addition to updating the secondary function, the method may comprise: receiving additional data records of APM data, where each additional data record is associated to a key of the plurality of keys; and writing the additional data records and the associated keys into a data buffer.

After writing APM data into a buffer, the method further comprises: querying the data buffer for the specified key or range of keys to identify a list of storage identifiers; and combining query results from querying the database and query results from querying the data buffer.

Typically, if the number of entries in the data buffer exceeds a certain threshold, a full update of the secondary function and the mapping function will be performed and the data buffer will be emptied.

The objective technical problem is also solved by a non-transitory computer-readable medium having computer-executable instructions that, upon execution of the instructions by a processor of a computer, cause the computer to: store data records of APM data from a plurality of computing entities in a database comprising multiple storage containers, where each data record is associated to a key of a plurality of keys and each storage container is identified by a unique storage identifier; assign a unique index value of a plurality of index values to each group of the data records having the same key; define a distribution function mapping the keys to the index values, where the distribution function is represented as a set of tuples each with a corresponding key and index value; generate a secondary function to approximate the distribution function, define a mapping function to map the index values to lists of storage identifiers; and in response to a request to retrieve data records for a specified key or range of keys, query the database to identify a list of storage identifiers based on the secondary function and the mapping function and retrieve the data records for the specified key or range of keys from one or more storage containers identified in the list of storage identifiers.

Further areas of applicability will become apparent from the description provided herein. The description and specific examples in this summary are intended for purposes of illustration only and are not intended to limit the scope of the present disclosure.

### Drawings

The drawings described herein are for illustrative purposes only of selected embodiments and not all possible implementations, and are not intended to limit the scope of the present disclosure.
- FIG. 1: schematically shows the storing of log lines originating at computing entities in storage containers/bulks,
- FIG. 2: shows a distribution function D for the 1^{st} application example,
- FIGs. 3a- 3f: show the construction of a spline function S approximating the distribution function D,
- FIG. 4: shows a distribution function D for the 2^{nd} application example,
- FIG. 5: shows a spline function S approximating the distribution function D for the 2^{nd} application example,
- FIG. 6: shows a distribution function D1 for the 3^{rd} application example,
- FIG. 7: shows a spline function S1 approximating the distribution function D1 for the 3^{rd} application example,
- FIG. 8: shows a distribution function D2 for the 3^{rd} application example,
- FIG. 9: shows a spline function S2 approximating the distribution function D2 for the 3^{rd} application example,
- FIG: 10: shows distribution functions D and D* before and after adding APM data,
- FIG. 11: shows the segments of the original spline function S and the ID of the new computing entity to be added,
- FIG. 12: shows the updated spline function S*,
- FIG. 13: shows the updated distribution function D* and the original spline function S,
- FIG. 14: shows the distribution function D of Fig. 2, a linear approximation L of D and the error bands between D and L,
- FIG. 15: shows an original distribution function D, an updated distribution function D* and spline functions approximating D and D*, and
- FIG. 16: shows a schematic for the storing, indexing and querying of records of APM data.

Corresponding reference numerals indicate corresponding parts throughout the several views of the drawings.

### Detailed description

Example embodiments will now be described more fully with reference to the accompanying drawings.

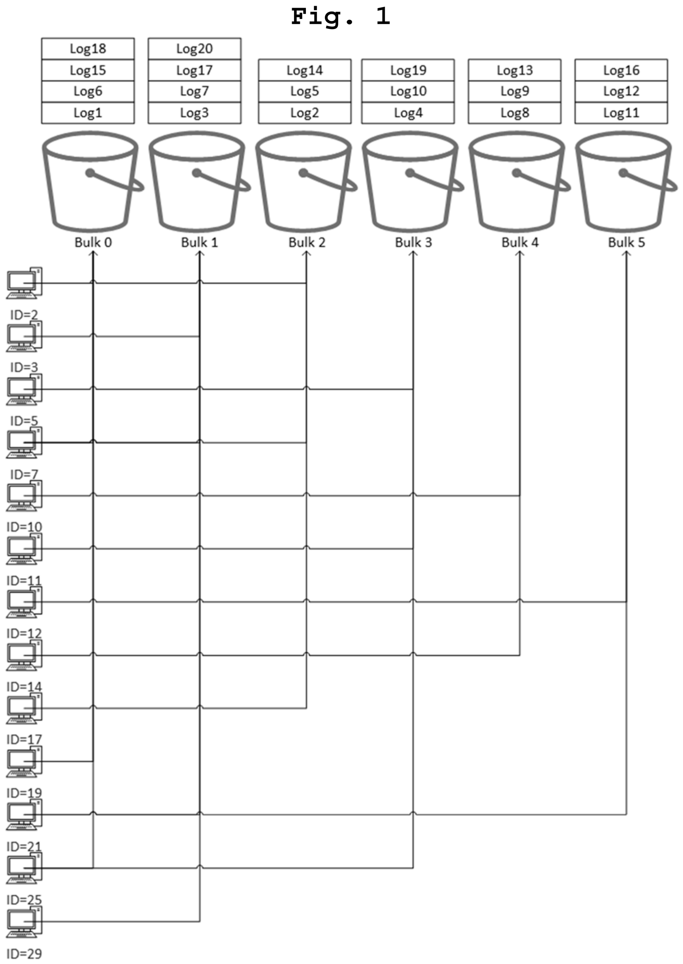

In a first application example, 13 computers identified by the entity identifiers ID 2, 3, 5, 7, 10, 11, 12, 14, 17, 19, 21, 25and 29 produce application monitoring and observability data, namely log lines Log1 to Log20. The log lines are stored in 6 storage containers, identified by the storage identifiers 0 to 5, in a database. The assignment of log lines, Log1...Log20, from the entity identifiers ID2...ID29, to storage identifiers SID 0 to 5 is given in Tab. 1 (see also Fig. 1):

**Tab. 1 Storage of log lines in storage containers**

| **ID** | **Log line** | **Storage Identifier SID** |
|---|---|---|
| 2 | Log1 | 0 |
| | Log2 | 2 |
| 3 | Log3 | 1 |
| 5 | Log4 | 3 |
| 7 | Log5 | 2 |
| | Log6 | 0 |
| | Log7 | 1 |
| 10 | Log8 | 4 |
| | Log9 | 4 |
| 11 | Log10 | 3 |
| 12 | Log11 | 5 |
| | Log12 | 5 |
| 14 | Log13 | 4 |
| 17 | Log14 | 2 |
| 19 | Log15 | 0 |
| 21 | Log16 | 5 |
| | Log17 | 1 |
| 25 | Log18 | 0 |
| | Log19 | 3 |
| 29 | Log20 | 1 |

In other words, application monitoring and observability data, here log lines, from different computing entities or computers, is stored in the storage containers given in Tab. 1. The disclosure is not limited to computers as entities producing APM data. APM data can also originate at various applications, operating systems, network entities such as routers, firewalls, switches etc. For the purpose of the disclosure it does not matter where or at what entity APM data originates as long as each record of APM data comprises or is associated to a key. In this example, the keys are the entity identifiers ID, where each entity is assigned a unique entity identifier ID. E.g., the log line Log1 from the computer having ID = 2 is contained in storage container 0, whereas the log line Log2 from the same computer is stored in container 2. Let us give one more example: The log lines Log18 and Log19 from the computer ID=25 are stored in storage containers 0 and 3, respectively. For each entity ID we can derive a list of storage containers where log lines are stored (see second column in Tab. 2). In addition, we can assign an index to each row in Tab. 1 sorted by the key ID, where the index e.g., starts with 0 and is subsequently incremented by 1:

**Tab. 2 Relation between ID, list of storage identifiers SID and index**

| **ID** | **List of storage identifiers SID** | **Index** |
|---|---|---|
| 2 | 0, 2 | 0 |
| 3 | 1 | 1 |
| 5 | 3 | 2 |
| 7 | 0, 1, 2 | 3 |
| 10 | 4 | 4 |
| 11 | 3 | 5 |
| 12 | 5 | 6 |
| 14 | 4 | 7 |
| 17 | 2 | 8 |
| 19 | 0 | 9 |
| 21 | 1, 5 | 10 |
| 25 | 0, 3 | 11 |
| 29 | 1 | 12 |

The meaning of entries in Tab. 2 is the following: E.g., the fourth row of the table disregarding the header indicates that logs from the computer ID=7 are stored in storage containers 0, 1 and 2, and the index 3 is assigned to this list of storage containers 0, 1, 2. For illustration, let us give another example: According to the last row, logs from the computer ID=29 are stored in storage container 1 having the index 12. Note that identical lists of storage containers can be assigned to different indexes, see e.g. the IDs 3 and 29.

The data in Tab. 2 is used to define a distribution function D and a mapping function M (subsequently also referred to as mapping table).

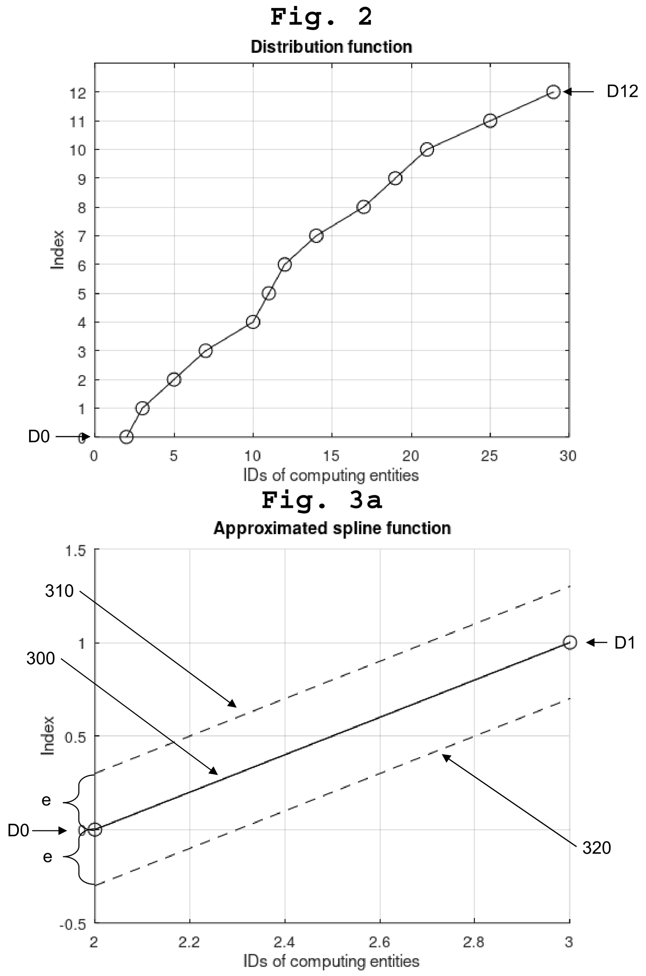

The distribution function D describes the relation between keys, in this example the entity identifiers ID of computing entities, and indexes "Index" in Tab. 2 (see also Fig. 2). The distribution function D can be thought of as an indexed set of tuples *Dᵢ =* (*kᵢ, pᵢ*)*,* where Dᵢ represents the i-th datapoint of the distribution function (see also the i-th column in Tab. 3), kᵢ represents the key of the i-th datapoint, and pᵢ represents the index (position) of the i-th datapoint. The distribution function D maps keys to indexes.

The distribution function D is given in Tab. 3 and Fig. 2:

**Tab. 3 Distribution function D**

| | | | | | | | | | | | | | |
|---|---|---|---|---|---|---|---|---|---|---|---|---|---|
| **ID** | 2 | 3 | 5 | 7 | 10 | 11 | 12 | 14 | 17 | 19 | 21 | 25 | 29 |
| **Index** | 0 | 1 | 2 | 3 | 4 | 5 | 6 | 7 | 8 | 9 | 10 | 11 | 12 |

In the subsequent paragraphs, the notation DX is used where X stands for the datapoint having the index=X. E.g., D5 stands for the datapoint (11,5) having the coordinates ID=11 and index=5.

In addition, a mapping function or mapping table M can be derived from the data in Tab. 2. The mapping function maps indexes to lists of storage identifiers SID. The mapping function/table M is given by the second and third columns of Tab. 2, see also Tab. 4:

**Tab. 4 Mapping table M**

| | | | | | | | | | | | | | |
|---|---|---|---|---|---|---|---|---|---|---|---|---|---|
| **Index** | 0 | 1 | 2 | 3 | 4 | 5 | 6 | 7 | 8 | 9 | 10 | 11 | 12 |
| **List of storage identifiers** | 0, 2 | 1 | 3 | 0, 1, 2 | 4 | 3 | 5 | 4 | 2 | 0 | 1, 5 | 0, 3 | 1 |

In the next step, the distribution function D in Fig. 2 having 13 distinct datapoints is approximated by a spline function S having a predefined, maximum allowable error e relative to the exact distribution function D such that the index, i.e., the exact value D(k) of the distribution function D for datapoint k, is given by an approximated value S(k) of the spline function S for datapoint k plus/minus a maximum error e, i.e. *D*(*k*) *= S*(*k*) ± *e.* For construction S, a maximum error of 0.3 is assumed. In order to find the spline function S, an approximation method such as the *Greedy-Spline-Corridor* method is used.

Instead of specifying a maximum allowable error e, the maximum number of spline segments can be specified. The real maximum error e_{Max} between the distribution function D and the spline S can be identified by pointwise comparison, *e_{Max}* = max (|*D*(*k*) *- S*(*k*)|)*.*

The *Greedy-Spline-Corridor* method tries to approximate as many datapoints of the distribution function D as possible by a piecewise linear approximation. The approximation starts with the first datapoint D0 as the start point.

Fig. 3a shows a trivial case, where the start point D0 at (2, 0) and the endpoint D1 at (3, 1) of D are connected by a straight line 300. The dashed lines 310 and 320 indicate a corridor around the line 300 having positive and negative distances e to the line 300. It is clear that the line 300 connects the two datapoints without any errors. As the datapoints D0 and D1 can be approximated by a line, the method checks whether the next datapoint, D2, can be added to the previous datapoints D0, D1 such that all datapoints D0, D1, D2 can be approximated by a line defined by D0 as start point and D2 as end point. As D0 and D2 are on the line, it needs to be checked whether the distance between the approximation D1* and D1 is smaller or equal to e.

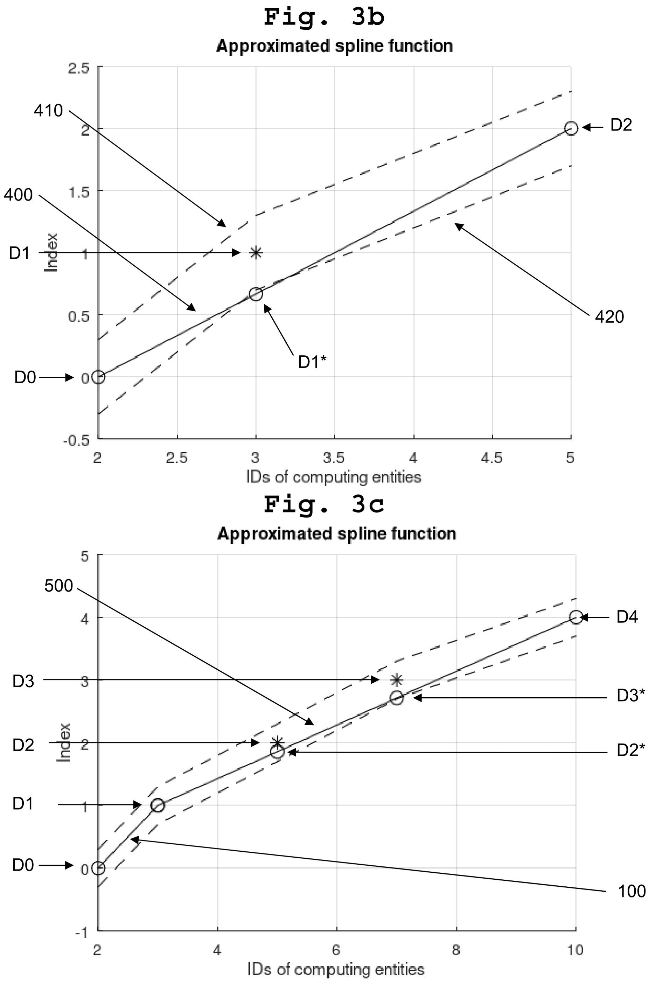

This situation is shown in Fig. 3b, where the line 400 connects D0 and D2 and the approximation D1* of D1 is outside the lower corridor 420 having the distance e from the line 400 connecting D0 and D2. As the approximation D1* of D1 has an error greater than the maximum allowable error e, D2 is not a permissible end point for the first segment of the spline function S, since the absolute value of the error between D1* and D1 > e. In fact, the index values of D1* and D1 are 0.67 and 1, respectively, such that the deviation |0.67-1| = 0.33 > e, where e = 0.3. Thus, the first segment of S is defined by D0 and D1.

The method continues with the 2^{nd} segment of S. For this, the endpoint D1 of the 1^{st} segment is the start point and it is checked for following datapoints whether the absolute value of the deviation for all intermediate points D2, D3 etc. is ≤ e. It turns out that datapoints D1, D2, D3 and D4 can be approximated by the line 500 shown in Fig. 3c connecting D1 and D4. However, trying to add D5 yields that D5 is an impermissible endpoint. Thus the 2^{nd} segment of S is defined by datapoints D1 and D4.

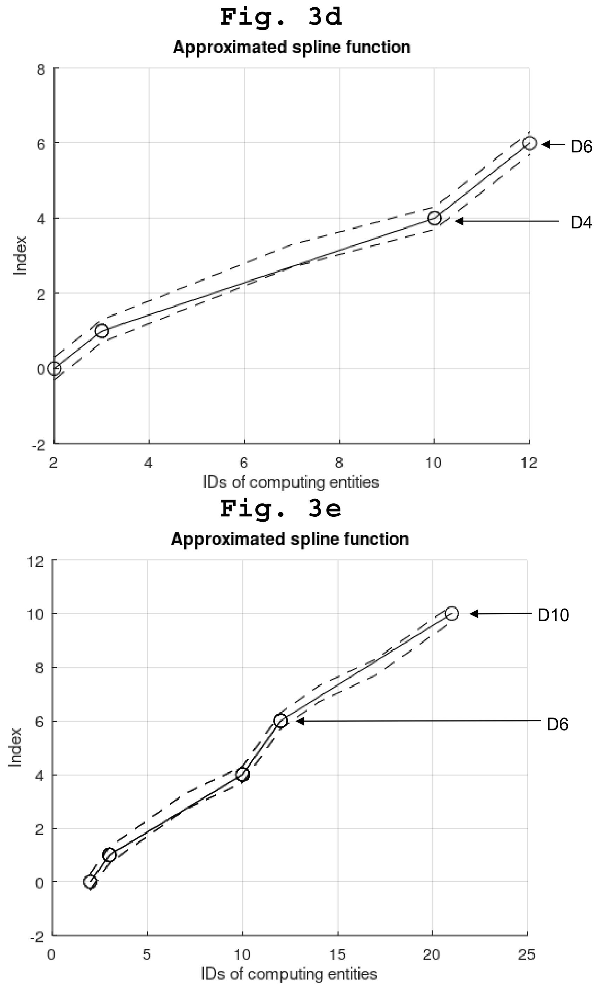

Repeating the procedure for the 3^{rd} segment of S with D4 as start point yields that the datapoint D5 can be approximated by a line between D4 and D6. Fig. 3d shows the 1^{st}, 2^{nd} and 3^{rd} segments of S.

The approximation continues with the 4^{th} segment: Fig. 3e shows the 1^{st}, 2^{nd}, 3^{rd} and 4^{th} segments of S, where the 4^{th} segment is defined by the datapoints D6 and D10.

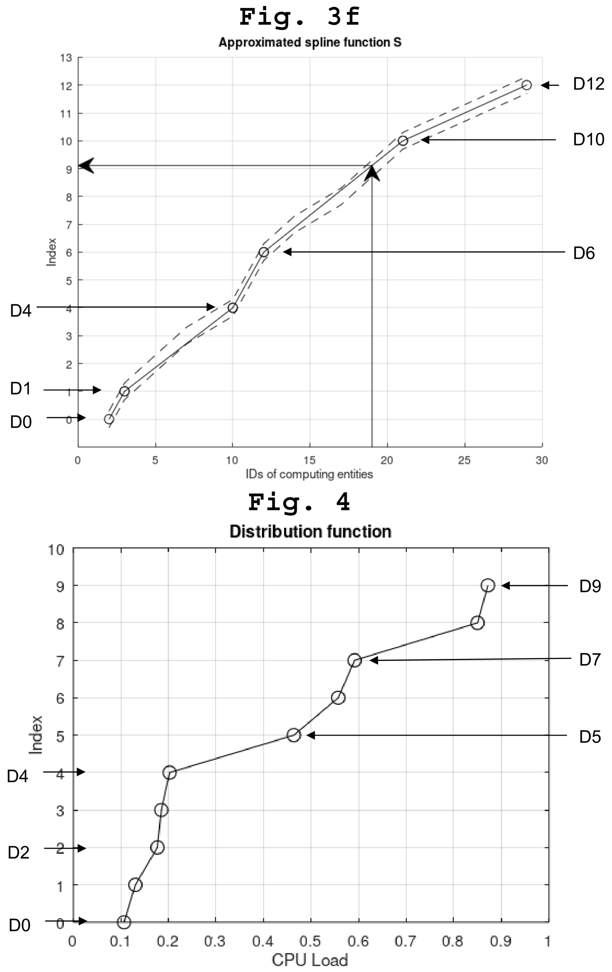

The final result of the approximation is shown in Fig. 3f, where S is defined by D0, D1, D4, D6, D10 and D12. As D comprised 13 datapoints, approximating D by the spline function S reduces the number of datapoints from 13 to 6 (see Fig. 3f). Generally, the smaller the max. allowable error e is, the more datapoints the spline function S has.

The approximated spline function S and the mapping function M are used for queries answering questions, in which storage containers APM data are stored for a specified entity identifier ID. Note that the approximated spline function S has a predefined accuracy e, in our case e=0.3. Therefore, the exact index D(k) needs to be in the range of S(k)±e.

Let us look at **point-queries** first:
First, let us query for storage containers containing APM data from the computer identified by the unique entity identifier ID=19. ID 19 is positioned between the datapoints (12, 6) and (21, 10) on the spline function S (see Fig. 3f). Using the linear relationship between the two datapoints, the approximated index value for ID=19 is S(19) = 6+(10-6)/(21-12)*(19-12) = 9.11 (rounded to 2 digits after the comma). Due to the accuracy of the approximation, the real index value is S(19)±e = [8.81, 9.41]. As we are using integer numbers as indexes, only index 9 is in that range. The mapping function M maps index 9 to the list of storage identifiers {0}. Doing a search in storage container 0 yields that indeed Log15 originating at ID19 is stored in that storage container. In addition, no other log line originating at ID=19 exists, hence the result is correct. Using the approximated spline function (also referred to as secondary function) to map the key to the index value is shown by arrows in Fig. 3f. As shown in the figure, the key ID=19 is mapped by the secondary function to the index value 9.11.

Second, let us query for storage containers containing log lines from the computer ID=7. The ID 7 is positioned between the datapoints (3, 1) and (10, 4) on the spline function S. The approximated value for ID=7 is S(7) = 1+3/7*4 = 2.71. Again, the real index value D(k) = S(k) ±e, thus D(7) =S(7)±e = [2.41, 3.01]. As we are using integer indexes, only index 3 is in that range. The mapping function M maps index 3 to the list of storage identifiers {0, 1, 2}. As these storage containers contain the log lines Log6, Log7 and Log5, this result is also correct.

Finally, let us look for storage containers containing log lines from the computer identified by the entity identifier ID=26. Note that this ID was selected on purpose in order to show a case where no matching data is contained in the index. ID=26 is positioned between the datapoints (21, 10) and (29, 12) on the spline function S. The approximated index for ID=26 is S(26) = 10+2/8*5 = 11.25. Again, the real index value is S(26)±e = [10.95, 11.55]. As we are using integer indexes, only index 11 is in that range. M maps the index 11 to the list of storage identifiers {0, 3}. Searching these storage containers yields, however, that no matching log lines are contained in it. Thus, the result given by the approximated spline function and the mapping function M is a so-called *false-positive.* It is noted that although the disclosed method may produce false-positives, it never produces *false-negatives,* i.e. cases where matching monitoring and observability data exists but is not included in the results.

Besides point-queries, also range-queries are possible. Let us look at **range-queries** next.

Assume that we are querying for storage containers in which log lines from computers identified by the entity identifiers ID 8 to 14 are stored. Looking up 8 in the approximated spline function S yields S(8) = 3.14. Looking up 14 in the approximated spline function S yields S(14) = 6.89. Note that both results have an accuracy of ±e. Thus, the indexes we need to look at are in the combined range [3.14-0.3, 6.89+0.3] = [2.84, 7.19]. This range contains the indexes 3, 4, 5, 6 and 7. The indexes 3, 4, 5, 6 and 7 are mapped by M to the lists of storage entities {{0, 1, 2}, 4, 3, 5, 4}. Thus, it is necessary to search the storage containers {0, 1, 2, 3, 4, 5} for matching log lines. Scanning these storage containers yields that in fact containers 3, 4 and 5 contain matching log lines, whereas containers 0, 1 and 2 do not contain matching logs. Thus, the method produced another correct result. It is noted that results may contain *false-positives,* however, all results matching the query are actually contained in the result.

In the first application example, integer keys as entity identifiers were used. However, the disclosed method is not limited to integer keys only.

In a second application example, computers produce another type of application monitoring and observability data, namely metric data, Met1 to Met10. The metric data describes e.g., the CPU load of a computer as a floating-point number in the range between 0 (no load) and 1 (full load). The metric data is stored in five storage containers identified by the storage identifiers SID 0 to 4. The relation between metric data, Met1...Met10, the key CPU load and the storage identifiers 0...4 is given in Tab. 6:

**Tab. 5 Storage of metric data in storage containers**

| **Metric** | **CPU Load** | **Storage identifier SID** |
|---|---|---|
| Met1 | 0.1768 | 0 |
| Met2 | 0.8499 | 2 |
| Met3 | 0.1305 | 1 |
| Met4 | 0.2026 | 3 |
| Met5 | 0.557 | 2 |
| Met6 | 0.4637 | 0 |
| Met7 | 0.1066 | 1 |
| Met8 | 0.185 | 4 |
| Met9 | 0.5914 | 4 |
| Met10 | 0.8716 | 3 |

Sorting the table by the key "CPU Load" in ascending order and assigning indexes starting from 0 and incrementing by 1 to the storage containers or list of storage containers list yields:

**Tab. 6 Relation between the key CPU load, the list of storage identifiers and index**

| **CPU load** | **Storage identifier SID** | **Index** |
|---|---|---|
| 0.1066 | 1 | 0 |
| 0.1305 | 1 | 1 |
| 0.1768 | 0 | 2 |
| 0.185 | 4 | 3 |
| 0.2026 | 3 | 4 |
| 0.4637 | 0 | 5 |
| 0.557 | 2 | 6 |
| 0.5914 | 4 | 7 |
| 0.8499 | 2 | 8 |
| 0.8716 | 3 | 9 |

The distribution function D mapping keys "CPU Load" to indexes is given in Tab. 7 and shown in Fig. 4:

**Tab. 7 Distribution function D**

| | | | | | | | | |
|---|---|---|---|---|---|---|---|---|
| **CPU Load** | 0.1066 | 0.1305 | 0.1768 | 0.185 | 0.2026 | 0.4637 | 0.557 | 0.5914 |
| **Index** | 0 | 1 | 2 | 3 | 4 | 5 | 6 | 7 |
| **CPU Load** | 0.8499 | 0.8716 | | | | | | |
| **Index** | 8 | 9 | | | | | | |

The mapping function/table M mapping indexes to lists of storage identifiers is given below:

**Tab. 8 Mapping table M**

| | | | | | | | | | | |
|---|---|---|---|---|---|---|---|---|---|---|
| **Index** | 0 | 1 | 2 | 3 | 4 | 5 | 6 | 7 | 8 | 9 |
| **List of storage identifiers SID** | 1 | 1 | 0 | 4 | 3 | 0 | 2 | 4 | 2 | 3 |

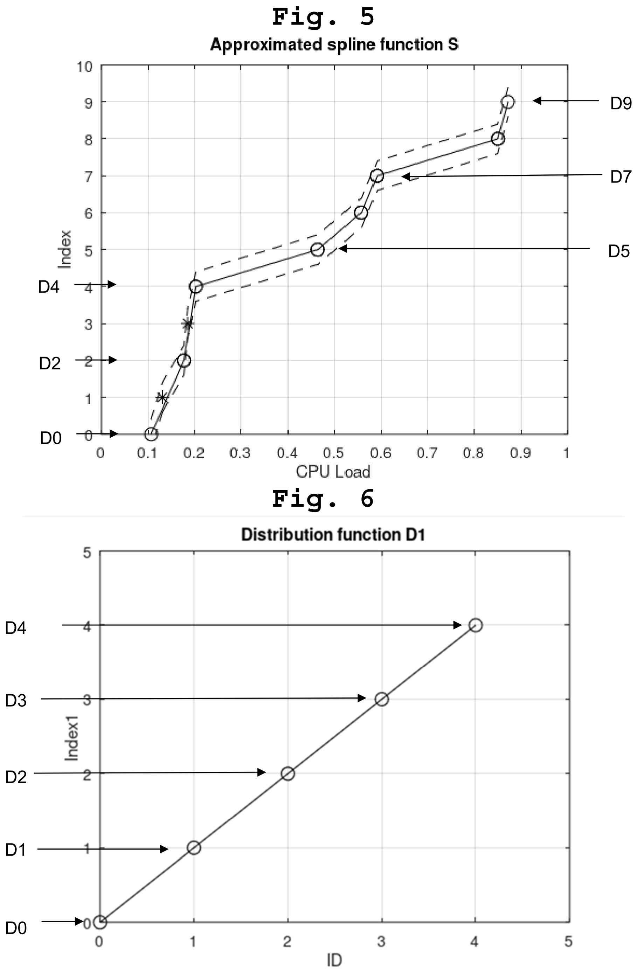

Assuming a maximum error e of e=0.4 and using the *Greedy-Spline-Corridor* method for constructing the approximated spline function S yields the spline function S given in Fig. 5. Whereas the distribution function in Fig. 4 comprises 10 datapoints, the approximated spline function S has 8 points, namely the datapoint having indexes D0, D2, D4, D5, D6, D7, D8 and D9.

Using the approximated spline function S and the mapping table M, let us perform a point-query first. Let us query for storage containers containing metric data for the CPU load = 0.5. In the approximated spline function S, the CPU load 0.5 is located between the spline points (0.4637, 5) and (0.5570, 6). As the left spline point (0.4637, 5) maps the CPU load 0.4637 to index 5 and the right spline point (0.5570, 6) maps the CPU load 0.5570 to index 6, we note that the indexes 5 and 6 of the spline points are *vis-a-vis* to each other. From this we can derive that the distribution function D does not have any intermediate point between these spline points. As the left spline point corresponds to CPU load 0.4637 and the right spline point to CPU load 0.5570, we immediately know that the distribution function D does not have a matching point for CPU load=0.5. For completeness, let us prove this result in another way: Performing a linear interpolation between the spline points yields the index value S(0.5) = 5+1/(0.5570-0.4637)*(0.5-0.4637) = 5.39. Note that the spline function has an accuracy e=0.4, i.e. the index value of the distribution function D for the CPU load 0.5, D(0.5) = S(0.5) ±e yielding the range [4.99, 5.79]. As we are using integer indexes only, only index 5 is contained in that range. The mapping function M maps the index 5 to the storage identifier 0. Doing a search in storage container 0 for metric data having CPU load 0.5 does not produce an exact match, however, metric data for CPU loads 0.1768 and 0.4637 are returned. The metric data Met6 for CPU load 0.4637 is the closest match for CPU load 0.5. Thus, although no exact match was found, the result is correct.

It is noted that if we were looking for exact matches only, the fact that no exact match is contained in the data could have been answered earlier. Since the key CPU load = 0.5 is located between two spline points having adjacent indexes, it is a priori known that no exact match is in the data.

Next, let us perform two range-queries: In the first case, we are querying for storage containers containing metric data for CPU loads > 0.8. As the CPU load is between 0 and 1, the first range-query is asking for storage containers containing CPU loads between 0.8 and 1. Using the spline function S for S(0.8) yields 7.81. Considering e=0.4 yields the lower index range [7.41, 8.21]. Using the spline function S for S(1) yields 14.92. Considering e=0.4 yields the upper index range [14.52, 15.32]. Thus, the integer indexes 8-15 are contained in the total range [7.41, 15.32]. As the maximum index is 9 in Tab. 6, only indexes 8 and 9 are relevant. The mapping function M maps the indexes 8, 9 to the storage containers 2 and 3. Indeed, these storage containers contain metric data for CPU loads 0.8499 and 0.8716. Thus, the result is correct.

For range-queries having an open upper boundary, it is beneficial to use the spline point having the highest index (above D9) instead of looking up the upper boundary. In the above example, S(0.8) yields indexes in the range [7.41, 8.21]. As the highest index is 9, indexes in the range of [7.41, 9] are relevant. The mapping function M maps the indexes 8 and 9 contained in the range to the storage containers 2 and 3. Thus, also this result is correct.

Next, we are querying for storage containers containing metric data for CPU loads < 0.2. As the CPU load is between 0 and 1, this range-query is asking for storage containers containing CPU loads between 0 and 0.2. Using the spline function S for S(0) yields -3.04. Considering e=0.4 yields the lower index range [-3.44, -2.64]. Using the spline function S for S(0.2) yields 3.80. Considering e=0.4 yields the upper index range [3.40, 4.20]. Thus, the valid indexes contained in the total range [-3.44, 4.20] are the indexes 0-4. The mapping function M maps the indexes 0-4 to the storage containers 1, 1, 0, 4 and 3, respectively. Thus, the storage containers 0, 1, 3 and 4 are searched for matching metric data. Indeed, these storage containers contain matching metric data Met1, Met3, Met7 and Met8. Thus, also this the result is correct.

For range-queries having an open lower boundary, it is beneficial to use the spline point having the lowest index number (above D0) instead of looking up the lower boundary. In the above example, S(0.2) yields indexes in the range [3.40, 4.20]. As the lowest index is 0, indexes in the range of [0, 4.20] are relevant. The mapping function M maps the indexes 0, 1, 2, 3, 4 contained in the range to the storage containers 1, 1, 0, 4 and 3, respectively. Thus, also this result is correct.

**In** a third application example, a slightly more complicated case with multiple keys is investigated. Assume that metric data, Met1...Met10, in Tab. 9 from 5 computers identified by the entity identifiers ID 0...4 is stored in storage containers identified by the storage identifiers SID 0...4:

**Tab. 9 Storage of metric data in storage containers**

| **Metric** | **ID** | **CPU Load** | **Storage identifier SID** |
|---|---|---|---|
| Met1 | 3 | 0.1768 | 0 |
| Met2 | 3 | 0.8499 | 2 |
| Met3 | 3 | 0.1305 | 1 |
| Met4 | 0 | 0.2026 | 3 |
| Met5 | 2 | 0.557 | 2 |
| Met6 | 3 | 0.4637 | 0 |
| Met7 | 3 | 0.1066 | 1 |
| Met8 | 3 | 0.185 | 4 |
| Met9 | 1 | 0.5914 | 4 |
| Met10 | 4 | 0.8716 | 3 |

The meaning of Tab. 9 is e.g., explained for Met1: The metric Met1 originating at the computer identified by ID=3 indicates a CPU load of 0.1768; Met1 is stored in a storage container identified by the storage identifier SID 0.

The data in Tab. 9 can be split into two parts. A first part comprises a distribution function D1 mapping the first key "ID" to a first index "Index1", and a first mapping function M1 maps "Index1" to a list of storage identifiers, and a second part comprises a distribution function D2 mapping the second key "CPU Load" to a second index "Index2", and a second mapping function M2 maps "Index2" to a list of storage identifiers.

Let us look at the first part of Tab. 9 first: Sorting the table by the first key ID, omitting the 1^{st} and 3^{rd} columns, combining storage containers for the same ID into a list of storage identifiers, and adding a first index "Index1" yields:

**Tab. 10 First part of Tab. 9**

| **ID** | **List of storage identifiers** | **Index1** |
|---|---|---|
| 0 | 3 | 0 |
| 1 | 4 | 1 |
| 2 | 2 | 2 |
| 3 | 0,1,2,4 | 3 |
| 4 | 3 | 4 |

Thus, the first distribution function D1 (see also Fig. 6) and the first mapping function M1 are:

**Tab. 11 Distribution function D1**

| | | | | | |
|---|---|---|---|---|---|
| **ID** | 0 | 1 | 2 | 3 | 4 |
| **Index1** | 0 | 1 | 2 | 3 | 4 |

**Tab. 12 Mapping table/function M1**

| | | | | | |
|---|---|---|---|---|---|
| **Index1** | 0 | 1 | 2 | 3 | 4 |
| **List of storage identifiers** | 3 | 4 | 2 | 0,1,2,4 | 3 |

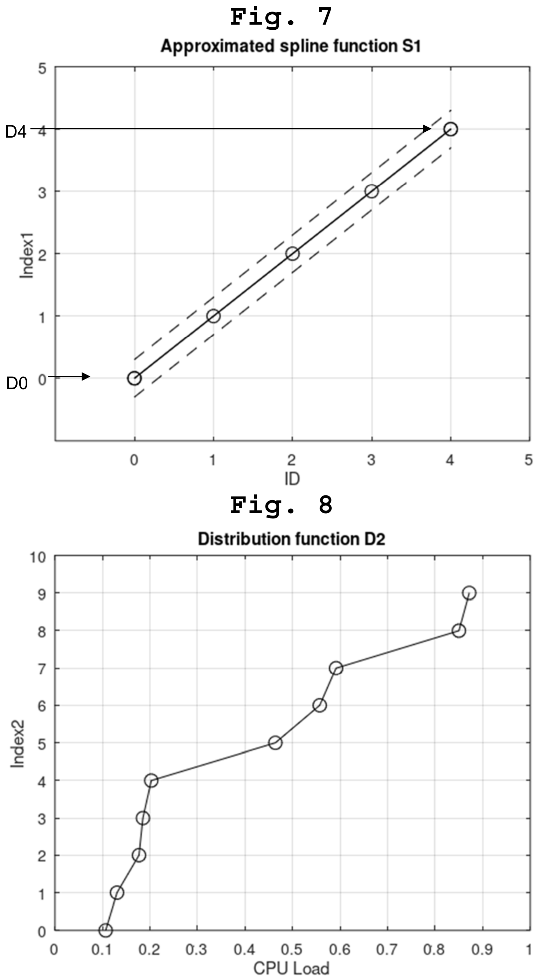

Approximating D1 by the *Greedy-Spline-Corridor* method for e=0.3 yields the approximated spline function S1 (see also Fig. 7):

**Tab. 13 Approximated spline function S1**

| **ID** | **Index1** |
|---|---|
| 0 | 0 |
| 4 | 4 |

It is noted that two possibilities exist for finding the error between a distribution function D and a corresponding approximated spline function S. As shown in the previous example, the simplest way is to use the max. allowable error e set during the construction of the spline function also as the maximum error limiting its accuracy. There is, however, another way for that. Let us e.g., consider D1 and S1. S1 was defined considering a max. permissible error e=0.4. Comparing S1 to D1 at all keys k, ID=0...4, reveals that the real max. error e*=|D1(k)-S1(k)| between S1 and D1 is 0, e*=0. Whereas according to the first procedure, the value of the distribution function D1 at a position k is given by D1(k)=S1(k)±e, the more accurate version is D1(k)=S1(k)±e*, where e* is the max. real error between the spline function S1 and the distribution function D1.

Next, let us look at the second part of Tab. 9: Sorting the table by the second key "CPU Load", omitting the 1^{st} and 2^{nd} columns of the table, combining storage identifiers for the same key into lists of storage containers, and adding a second index "Index2" yields:

**Tab. 14 Second part of Tab. 9**

| **CPU load** | **List of storage identifiers** | **Index2** |
|---|---|---|
| 0.1066 | 1 | 0 |
| 0.1305 | 1 | 1 |
| 0.1768 | 0 | 2 |
| 0.185 | 4 | 3 |
| 0.2026 | 3 | 4 |
| 0.4637 | 0 | 5 |
| 0.557 | 2 | 6 |
| 0.5914 | 4 | 7 |
| 0.8499 | 2 | 8 |
| 0.8716 | 3 | 9 |

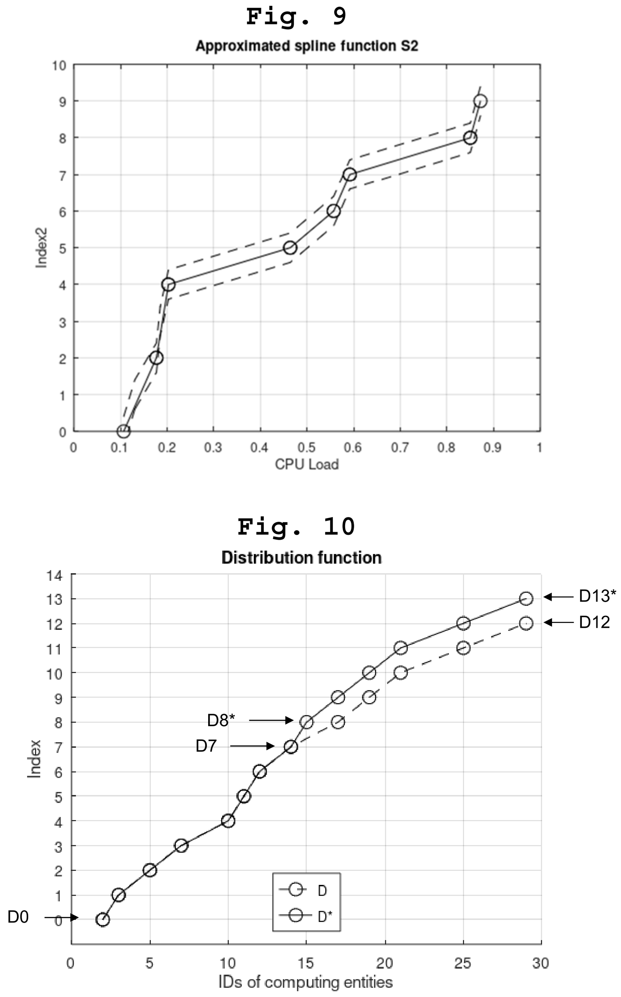

The corresponding distribution function D2 is given in Fig. 8 and the approximated spline function S2 for e=0.4 is given in Fig. 9.

The distribution function D2 is:

**Tab. 15 Distribution function D2**

| | | | | | | | | | | |
|---|---|---|---|---|---|---|---|---|---|---|
| **CPU load** | 0.1066 | 0.1305 | 0.1768 | 0.185 | 0.2026 | 0.4637 | 0.557 | 0.5914 | 0.8499 | 0.8716 |
| **Index2** | 0 | 1 | 2 | 3 | 4 | 5 | 6 | 7 | 8 | 9 |

The distribution function D2 is approximated by the spline function S2 (see Fig. 8) for e=0.4 thereby reducing the number of datapoints from 10 to 8:

**Tab. 16 Approximated spline function S2**

| | | | | | | | | |
|---|---|---|---|---|---|---|---|---|
| **CPU load** | 0.1066 | 0.1768 | 0.2026 | 0.4637 | 0.557 | 0.5914 | 0.8499 | 0.8716 |
| **Index2** | 0 | 2 | 4 | 5 | 6 | 7 | 8 | 9 |

Calculating the max. real error e* between S2 and D2 for all keys yields e*=0.36. Finally, there is a mapping function M2 mapping Index2 to the List of storage containers:

**Tab. 17 Mapping function M2**

| | | | | | | | | | | |
|---|---|---|---|---|---|---|---|---|---|---|
| **Index2** | 0 | 1 | 2 | 3 | 4 | 5 | 6 | 7 | 8 | 9 |
| **List of storage containers** | 1 | 1 | 0 | 4 | 3 | 0 | 2 | 4 | 2 | 3 |

Using the approximated spline functions S1, S2 and the mapping functions M1, M2, let us now query the metric data according to Tab. 9 for:

**Tab. 18 Listing of queries**

| Query | ID | CPU load |
|---|---|---|
| Q1 | ≤ 1 | ≥ 0.8 |
| Q2 | ≥ 3 | ≥ 0.8 |
| Q3 | ≤ 1 | ≤ 0.2 |
| Q4 | ≥ 3 | ≤ 0.2 |

Let us start with query Q1 looking for data with ID≤1 and CPU load ≥ 0.8: The query is split into two parts, namely part 1 querying metric data originating at ID ≤ 1, and part 2 querying metric data having CPU load ≥ 0.8. Part 1 is dealt with using S1 and M1, and part 2 is dealt with using S2 and M2.

S1 for ID=0 and ID=1 yields S1(0)=0 and S1(1)=1, respectively. In both cases, the real maximum error e* is 0 thus the combined range of Index 1 is [0-e*, 1+e*]=[0, 1]. The mapping function M1 maps Index1 to a list or storage containers, i.e. M1(0)=3 and M1(1)=4, respectively. Thus, metric data coming from computing entities 0 and 1 shall be found in storage containers 3 and 4.

S2 for CPU load=0.8 and CPU Load=1 yields S2(0.8)=7.81 and S2(1)=9, respectively. For the lower bound 0.8, the real maximum error e* is 0.36 thus the combined range of Index2 is [7.45, 9]. In this range, the indexes Index2 8 and 9 are contained. The mapping function M2 maps Index2 to a list or storage containers, i.e. M2(8)=2 and M2(9)=3, respectively. Thus, metric data having a CPU Load > 0.8 shall be found in storage containers 2 and 3.

As both conditions ID 0 or 1 and CPU Load ≥ 0.8 need to be fulfilled, the storage containers to be search for are found in the intersection between the sets {3, 4} and {2, 3}, which is {3}. Performing a search in storage container 3 for matching metric data yields, however, no matching data. Thus, the obtained result was a false positive.

Next, let us look at query Q2 looking for data with ID≥3 and CPU load ≥ 0.8: S1 for ID=3 and ID=4 yields S1(3)=3 and S1(4)=4. Considering the real maximum error e*=0, the combined range of Index 1 is [3, 4]. The mapping function M1 maps Index1 to a list of storage containers, i.e. M1(3)={0, 1, 2, 4} and M1(4)={3}, respectively. Thus, metric data coming from computing entities 3 and 4 shall be found in storage containers 0, 1, 2, 3 and 4.

As shown above, metric data for CPU load ≥ 0.8 shall be found in storage containers 2 and 3.

As both conditions ID 3 or 4 and CPU Load ≥ 0.8 need to be fulfilled, the storage containers to be searched are found in the intersection between the sets {0, 1, 2, 3, 4} and {2, 3}, which is {2, 3}. Performing a search in storage containers 2 and 3 for metric data having ID 3 or 4 and having a CPU Load ≥ 0.8 yields matching metrics Met2 and Met10. Thus, the result is correct.

Query Q3 looking for data with ID≤1 and CPU load ≤ 0.2 will be discussed next: Metric data originating at computing entities 0 and 1 is found in storage containers 3 and 4 (see query D1 above). On the other hand, S2 for CPU Load≥0 and CPU Load≤0.2 yields S2(0)=0 and S2(0.2)=3.8, respectively. In the latter case, the real maximum error e* is 0.36 thus the combined range of Index2 is [0, 4.16]. In this range, the indexes Index2 0, 1, 2, 3 and 4 are contained. The mapping function M2 maps these indexes to the storage containers 0, 1, 3 and 4. Thus, metric data having a CPU Load ≤ 0.2 shall be found in storage containers 0, 1, 3 and 4.

As both conditions ID 0 or 1 and CPU Load ≤ 0.2 need to be fulfilled, the storage containers to be searched are found in the intersection between the sets {3, 4} and {0, 1, 3, 4}, which is {3, 4}. Performing a search in storage containers 3 and 4 yields no matching data. Thus, the result was a false positive.

Finally, let us look at query Q4 looking for data with ID≥3 and CPU load ≤ 0.2: Metric data originating at computing entities 3 and 4 is found in storage containers 0, 1, 2, 3 and 4 (see query Q2 above). On the other hand, metric data for CPU load ≤ 0.2 is found in storage containers 0, 1, 3 and 4 (see query Q3).

As both conditions Origin ID 3 or 4 and CPU Load ≤ 0.2 need to be fulfilled, the storage containers to be searched are found in the intersection between the sets {0, 1, 2, 3, 4} and {0, 1, 3, 4}, which is {0, 1, 3, 4}. Performing a search in storage containers 0, 1, 3 and 4 for matching metric data yields metrics Met1, Met3, Met7 and Met8. Thus, the result was correct.

In a fourth application example, an alternative for approximating the distribution function D by a spline function S is demonstrated. In order to allow a comparison with the first application example, the same APM data, i.e. the log lines Log1 to Log20 stored in storage containers 0 to 5, is used again.

In the first application example, the function S is a piecewise linear function having multiple segments, also referred to as spline function. When constructing the spline function S, a maximum allowable error e = 0.3 was assumed such that the index received by mapping the key k by the distribution function D is given by mapping said key k by the approximated spline function S plus/minus the maximum permissible error e, i.e., *D*(*k*) *= S*(*k*) ± *e.* Constructing the approximated spline function S for e=0.3 yields a piecewise linear function having 5 segments defined by the data points D0, D1, D4, D6, D10 and D12 (see Fig. 3f and above).

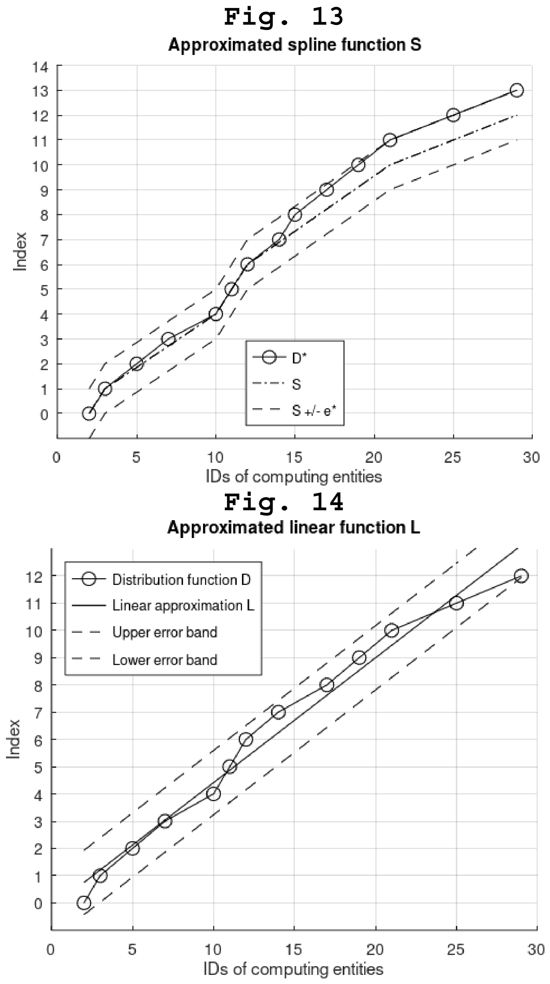

Instead of approximating the distribution function D by a piecewise linear spline function S, the distribution function D can be approximated by a purely linear function L as shown in Fig. 14. In this case, the distribution function D was approximated by a linear function L minimizing the sum of squared errors between the distribution function D and the linear function L. Doing this yields the function *L*(*k*) *= a · k + b*, where a = 0.458 and b = -0.166. Approximating D by a linear function L, however, generally yields to a greater maximum error e_{Lin} between the approximated linear function L and the distribution function D. In the present case, the maximum error e_{Lin} = 1.12. Thus, the upper and the lower error bands are defined by L+e_{Lin} and L-e_{Lin}, respectively (see Fig. 14). Approximating the distribution function D by a linear function reduces the computational load compared to constructing a piecewise linear spline function, e.g., by the *Greedy-Spline-Corridor* method. On the other hand, a spline function allows the approximation of D with a freely selectable permissible error e.

Although querying works essentially in the same way as in the first application example, let us show two point-queries: First, let us look for storage containers containing logs from the computing entity ID=19. The linear function L maps the key to an index; in our case L(19) maps ID=19 to index 8.54 ± 1.12, thus to the range [7.42, 9.66]. Within that range, the integer indexes 8 and 9 are found. The mapping function M maps these indexes to the storage containers {2, 0}. While the storage container 0 is correct, the storage container 2 is a false positive. Still, the result is correct. Next, let us look for storage containers containing logs from the computing entity ID=7. The linear function L maps ID=7 to index 3.04 ± 1.12, thus to the range [1.92, 4.16]. Within that range, the integer indexes 2, 3 and 4 are found. M maps these indexes to the list of storage containers {3, {0, 1, 2}, 4}. While the storage containers 0, 1, 2 are correct, the storage containers 3 and 4 are false positives. Still, the result is correct too.

In a fifth application example, different update strategies are presented. For this, let us return to the first application example, where log lines from computing entities having the IDs 2, 3, 5, 7, 10, 11, 12, 14, 17, 19, 21, 25 and 29 were stored in storage containers/bulks 0...5 (see Tab. 1 and Fig. 1). Applying the methodology of the first application example, a spline function S approximating the distribution function D and a mapping function M were generated such that both point- and range-queries can be executed. For the purpose of updating, assume that a new computing entity having the entity identifier ID=15 produced log lines, Log21* and Log22*. These log lines were stored in storage containers 2 and 4, respectively. In addition, it is assumed that the existing computer ID=2 produced log line, Log23*, which was stored in the storage container 0. Subsequently, different methods for updating and querying will be presented.

According to a first variant for updating, a full update of the spline function S and the mapping function M is performed. Considering the additional data, the assignment of log lines, Log1...Log23 from entity identifiers ID2...ID29, to storage containers having the storage identifiers 0 to 5, is given below. Note that new logs are printed bold in the table, and not all logs are listed below.

**Tab. 19 Updated list of log lines stored in storage containers**

| **ID** | **Log line** | **Storage identifier SID** |
|---|---|---|
| **2** | Log1 | 0 |
| | Log2 | 2 |
| | **Log23** | **0** |
| ... | ... | ... |
| 14 | Log13 | 4 |
| **15** | **Log21** | **2** |
| | **Log22** | **4** |
| 17 | Log14 | 2 |
| ... | ... | ... |
| 29 | Log20 | 1 |

Thus, the relation between the key, ID, the list of storage identifiers and indexes is given below:

**Tab. 20 Updated relations between ID, list of storage containers/bulks and index**

| **ID** | **List of storage containers/bulks** | **Index** |
|---|---|---|
| 2 | 0, 2 | 0 |
| 3 | 1 | 1 |
| 5 | 3 | 2 |
| 7 | 0, 1, 2 | 3 |
| 10 | 4 | 4 |
| 11 | 3 | 5 |
| 12 | 5 | 6 |
| 14 | 4 | 7 |
| **15** | **2, 4** | **8** |
| **17** | **2** | **8**→**9** |
| **19** | **0** | **9**→**10** |
| **21** | **1, 5** | **10**→**11** |
| **25** | **0, 3** | **11**→**12** |
| **29** | **1** | **12**→**13** |

Due to the insertion of a new key having ID=15, keys having an ID>15 are assigned to indexes incremented by 1, e.g., the key ID=21 used to be assigned to index 10 and is reassigned to index 11.

Subsequently, the updated distribution function is called D*, the updated spline function S* and the updated mapping function M*. These functions consider additional data. The distribution function D* maps the key ID to an index and the mapping function M* maps an index to a list of storage identifiers. The new functions D* and M* are:

**Tab. 21 Updated distribution function D***

| | | | | | | | | | | | | | | |
|---|---|---|---|---|---|---|---|---|---|---|---|---|---|---|
| **ID** | 2 | 3 | 5 | 7 | 10 | 11 | 12 | 14 | 15 | 17 | 19 | 21 | 25 | 29 |
| **Index** | 0 | 1 | 2 | 3 | 4 | 5 | 6 | 7 | 8 | 9 | 10 | 11 | 12 | 13 |

**Tab. 22 Updated mapping function / mapping table M***

| **Index** | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| **List of storage containers/bulks** | 0, 2 | 1 | 3 | 0, 1, 2 | 4 | 3 | 5 | 4 | 2, 4 | 2 | 0 | 1, 5 | 0, 3 | 1 |

Also in Fig. 10 the updated distribution function considering additional data is referred to as D*. Fig. 10 and Tab. 21 indicate that the first 8 data points, D0...D7, of D remain unchanged in D*, whereas the other data points D8*...D13* are different in D due to the new computing ID=15.

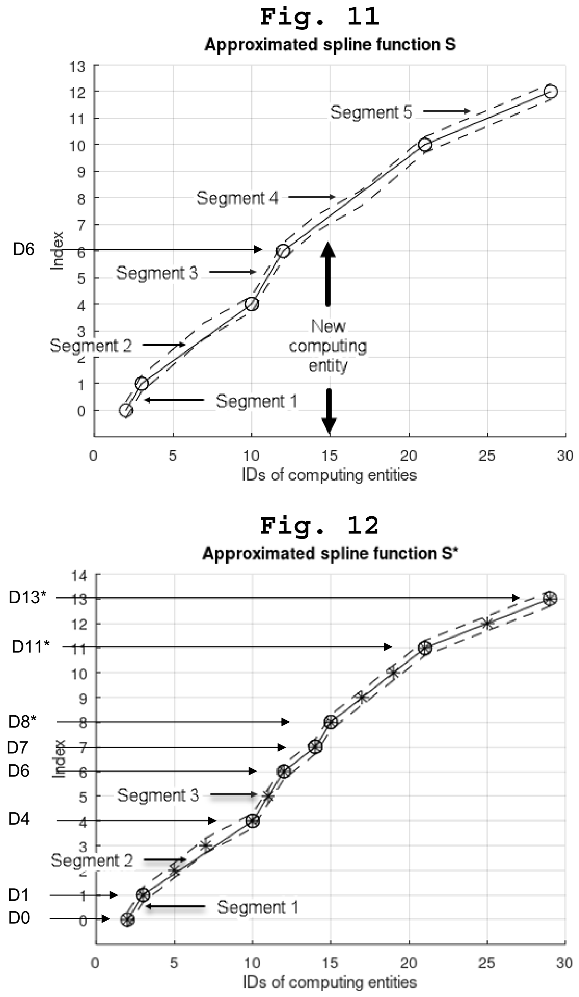

In a first step, D* is approximated by an updated spline function S* using the *Greedy-Spline-Corridor* method described above. The maximum allowable error was kept at e = 0.3. Doing this, yields the updated spline function S* shown in Fig. 12. It is noted that generating S* does not have to start from the first data point. Instead, all segments having indexes lower than the 1^{st} added computing entity ID=15 can be used in its entirety. In the present case, segments 1, 2 and 3 of the spline function S can be reused and the endpoint D6 of segment 3 is the starting point of segment 4. The approximated spline function S* (see Fig. 12) consists of 7 segments defined by data points D0, D1, D4, D6, D7, D8*, D11* and D13*. The segments defining the spline are within the error threshold e such that *D**(*k*) *= S**(*k*) ± *e*. The updated mapping function M* is given in Tab. 22.

Using the approximated spline function S* and the updated mapping function M*, both point and range-queries are possible as outlined above.

First, let us perform two point-queries: First, let us look for storage containers containing logs from the computer having the ID=19. S* maps the key ID=19 to index 10 ± e, thus to the range [9.7, 10.3]. Within that range, only the integer index 10 is found. M* maps index 10 to the list of storage containers 0, which is correct. Next, let us look for storage containers containing logs from the added computing entity ID=15. S* maps ID=15 to index 8 ± e, thus to the range [7.7, 8.3]. Within that range, only the integer index 8 is present. M* maps index 8 to the list of storage containers {2, 4}, which is correct too.

For completeness, let us also perform a range-query. Let us look for storage containers containing logs from computers having IDs between 20 and 25. S* maps ID=20 to index 10.5 ± e and ID=25 to index 12 ± e. Thus, the range [10.2, 12.3] is identified. Within that range, the integer indexes 11 and 12 are present. M* maps these indexes to the list of storage containers {{1, 5}, {0, 3}}. Hence, the storage containers 0, 1, 3 and 5 were correctly identified.

Although the full update of S* and M* is as accurate as the approximation in the first place, it may be less suitable for frequent updates of the underlying data since updates are computationally expensive.

Next, a second variant for updating is presented where the spline function S is not updated at all. Using the same data as in the first variant, the updated mapping function M* is given in Tab. 22. Not updating the spline function S, however, introduces an error e* greater than the permissible error e allowed when building the original spline function S. This is shown in Fig. 13, where the distribution function D* considering additional data points, the original spline function S and the original spline function S ± a new error e* are displayed. The new error e* is given by the absolute value for the pointwise comparison between S(k) and D*(k), i.e., e* = |*S*(*k*) *- D**(*k*)| for all keys k. Here e* = 1, whereas e used to be 0.3.

Also for this variant, two point-queries shall be performed: First, let us look for storage containers containing logs from the computer having the ID=19. S maps ID=19 to index 9.11 ± e*, thus to the range [8.11, 10.11]. Within that range, the integer indexes 9 and 10 are found. M* maps indexes 9 and 10 to the list of storage containers 2 and 0, respectively. As the list of storage containers {2, 0} comprises the correct storage container 0, the result is correct. Next, let us look for storage containers containing logs from the added computing entity having the ID=15. S maps ID=15 to index 7.33 ± e*, thus to the range [6.33, 8.33]. Within that range, the integer indexes 7 and 8 are present. M* maps indexes 7 and 8 to the list of storage containers {{4}, {2, 4}}, which is correct too.

For completeness, let us also perform a range-query. Let us look for storage containers containing logs from computers having IDs between 20 and 25. S maps ID=20 to index 9.56 ± e* and ID=25 to index 11 ± e*. Thus, the range [8.56, 12] is identified. Within that range, the integer indexes 9, 10, 11 and 12 are present. M* maps these indexes to the list of storage containers {2, 0, {1, 5}, {0, 3}}. Hence, the storage containers 0, 1, 3 and 5 were correctly identified.

Next, a third variant for updating is presented where only the segment of the spline function S is updated, where an additional key was added. In case multiple keys are added, potentially multiple segments need updating. Contrary to this, the mapping function is fully updated. By doing so, the computational overhead for updating the spline function S is greatly reduced compared to the first variant, i.e. full update, and the error e* between the distribution function D* considering additional data points and the updated spline function is reduced compared to the second variant, i.e. no update of the spline function.

The spline function S approximating the original distribution function D is defined by the datapoints D0, D1, D4, D6, D10 and D12, see Figs. 3f and 11, thus S = {*D*0*, D*1*, D*4*, D*6*, D*10*, D*12}*.* The idea for the partial update is as follows: Adding a new key, ID=15, to the distribution function D does not affect segments 1, 2 and 3 of S, as the new key is not within the respective range, defined by the start- end endpoints, of these segments. However, segment 4 of S is affected by the update since the new key, ID=15, is within the segment's range. In addition, segment 5 changes marginally as the indexes for datapoints D10 and D12 defining this segment are increased by 1. **In** addition, the accuracy for segments 1, 2, 3 and 5* (after moving it up by 1 on the y-axis) of S remain unchanged.

The distribution function for the original data is given in Tab. 3. Adding a new key, ID=15, changes the situation as follows:

**Tab. 23 Datapoints and segments of S* considering the additional datapoint**

| **Datapoint** | **ID** | **Index** | **Segment** | **Comment** |
|---|---|---|---|---|
| D0 | 2 | 0 | S1_{Start} | S1 unchanged |
| D1 | 3 | 1 | S1_{End}, S2_{Start} | S2 unchanged |
| D2 | 5 | 2 | | |
| D3 | 7 | 3 | | |
| D4 | 10 | 4 | S2_{End}, S3_{Start} | S3 unchanged |
| D5 | 11 | 5 | | |
| D6 | 12 | 6 | S3_{End}, S4_{Start} | S4 new |
| D7 | 14 | 7 | | |
| **D8*** | **15** | **8** | | |
| **D8→D9*** | 17 | **8→9** | | |
| **D9→D10*** | 19 | **9→10** | | |
| **D10→D11*** | 21 | **10→11** | S4_{End}, S5_{Start} | S5 moved up |
| **D11→D12*** | 25 | **11→12** | | |
| **D12→D13*** | 29 | **12→13** | S5_{End} | |

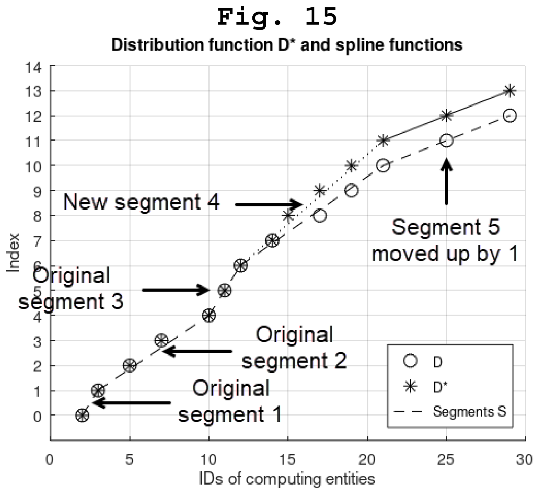

The original segments 1, 2 and 3 as well as the segment 5 moved up by 1 on the y-axis are shown in Fig. 15. Two variants will be shown how to consider the additional key in the updated spline function S*.

According to a first case, the new datapoint D8* is added to the distribution function D*, however, the start- end endpoints of segments remain unchanged. Doing this potentially increases the actual error between the updated distribution function D* and the updated spline function S*. This situation is shown in Fig. 15, where the new segment 4 connects the original datapoints D6, D10 or the D6, D11*, respectively. The maximum error e* between the line connecting D6 and D11* for the intermediate datapoints D7, D8*, D9*, and D10* is 0.33. Thus, the error is only 1/3 of the error e* for the second variant with no update of S. However, the error e* is larger than the allowable error e when construction S.

According to a second case, a new segment or multiple new segments are generated between the endpoint of the previous segment and the start-point of the following segment, e.g., by utilizing the Greedy-Spline-Corridor method. By constructing one or more new segments, the maximum allowable error e between D* and S* can be maintained for S* after updating. Doing this for e = 0.3 yields three segments defined by the datapoints D6, D7, D8* and D11* (see also Fig. 12). In fact, the new segments approximate all intermediate datapoints without errors, i.e., for all keys e* = |D* - S*| = 0. The mapping function M is defined in Tab. 22.

According to a preferred embodiment, in a first step, the definition of the segment containing the new datapoint remains unchanged and the actual error e* for all keys is calculated, e* *=* |*D** - *S**|. If e* is greater than a predefined threshold value, one or more segments are constructed, e.g., by the Greedy-Spline-Corridor method.

Also, for the first case of this variant, two point-queries shall be performed: First, let us look for storage containers containing logs from the computer having the ID=19. S* maps ID=19 to index 9.89 ± e*, thus to the range [9.56, 10.22]. Within that range, the integer index 10 is found. M* maps index 10 to the list of storage containers 0. As the list of storage containers {0} comprises the correct storage container 0, the result is correct. Next, let us look for storage containers containing logs from the added computing entity having the ID=15. S maps ID=15 to index 7.67 ± e*, thus to the range [7.34, 8]. Within that range, the integer index 8 is present. M* maps index 8 to the list of storage containers {2, 4}, which is correct too.

For completeness, let us also perform a range-query. Let us look for storage containers containing logs from computers having IDs between 20 and 25. S* maps ID=20 to index 10.44 ± e* and ID=25 to index 12 ± e*. Thus, the range [10.11, 12.33] is identified. Within that range, the integer indexes 11 and 12 are present. M* maps these indexes to the list of storage containers {{1, 5}, {0, 3}}. Hence, the storage containers 0, 1, 3 and 5 were correctly identified.

Next, a fourth variant for updating utilizing a data buffer is presented. In this variant, no function is updated, i.e., S and M are used as in the first application example. Instead of updating these functions, additional data is written into a data buffer. In order to compare the four variants for updating, the same data is used as in the first, second and third variant for updating.

The additional data, namely three new log lines, Log21*, Log22* and Log23*, shall be considered. Log lines Log21* and Log22* originate at the computing entity having ID=15 and are stored in storage containers 2 and 4, respectively. Log line Log23* originates at the computing entity ID=2 and is stored in storage container 0.

First, the additional data is written into a data buffer BUF, see Tab. 24. The data buffer BUF comprises at least two columns, one column representing the key, in our case the entity identifier ID, and another column representing the storage identifier SID. The column "Log line" is optional.

**Tab. 24 Data buffer BUF holding additional data**

| **ID** | **Log line** | **Storage identifier SID** |
|---|---|---|
| 15 | Log21 | 2 |
| | Log22 | 4 |
| 2 | Log23 | 0 |

Next, preferably the data in the data buffer BUF is sorted by the key - in our case ID, e.g., in ascending order, see below:

**Tab. 25 Sorted data buffer BUF**

| **ID** | **Log line** | **Storage identifier SID** |
|---|---|---|
| 2 | Log23 | 0 |
| 15 | Log21 | 2 |
| | Log22 | 4 |

Sorting the data buffer BUF by key is advantageous since not the entire buffer needs to be searched. This speeds up searches within the data buffer. However, sorting is not necessary. In addition, it is also possible to combine sorted and unsorted buffers. E.g., when the unsorted buffer is full, the buffers are merged and the new buffer is sorted in order to create a sorted buffer.

The querying of the data structures S, M and BUF is shown next. Let us start again with two point-queries: First, we are searching for storage containers containing logs from the computer having the ID=19. S maps ID=19 to index 9.11 ± e, thus to the range [8.81, 9.41]. As S is reused from the first application example, also e=0.3 applies. Within that range, only the integer index 9 is found. M maps index 9 to storage container 0. In addition to querying S and M, the data buffer BUF is checked whether it contains one or more entries for the ID to be queried. As this is not the case, the result is that log lines from ID=19 are found in storage container 0. Thus, the result is correct.

Next, let us look for storage containers containing logs from the computing entity having ID=15. S maps ID=15 to index 7.33 ± e, thus to the range [7.03, 7.66]. Within that range, no integer index is present. In addition to querying S and M, the data buffer BUF is checked whether it contains one or more entries for the ID to be queried. As this is the case, the matching storage containers are added to the result. Thus, it is found that log lines from ID=19 are found in storage containers 2 and 4, which is correct too.

For completeness, let us perform a range-query. Let us look for storage containers containing logs from computers having IDs between 20 and 25. S maps ID=20 to index 9.56 ± e and ID=25 to index 11 ± e. Thus, the range [9.26, 11.3] is identified. In that range, integer indexes 10 and 11 are present. M maps these indexes to the list of storage containers {{1, 5}, {0, 3}}. In addition to querying S and M, the data buffer BUF is checked whether it contains one or more entries for the ID to be queried. This is not the case. Thus, it is found that log lines from IDs 20...25 are found in storage containers 0, 1, 3 and 5, which is correct.

In case the number of additional data points in the data buffer BUF exceeds a limit, e.g., a certain number of points or 1% of the number of the original data points, a full update of S and M is performed and the data buffer BUF is cleared.

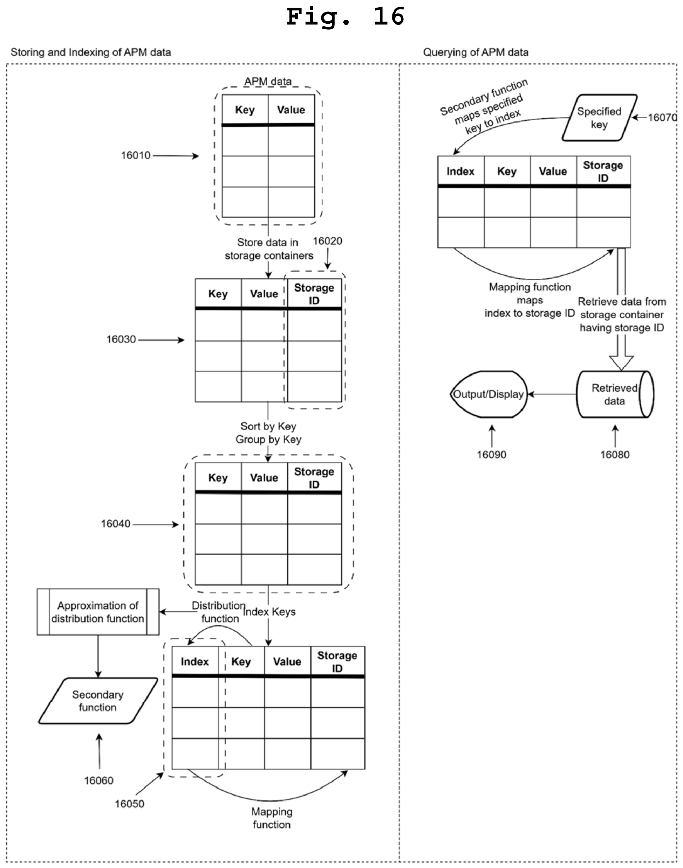

The disclosed technique for storing, indexing and querying of records of APM data is schematically shown in Fig. 16. Each record comprises a key and a value. Records of APM data, e.g., log messages, 16010 are stored in storage containers in a database such that each record is stored in one storage container having a unique Storage ID. The records of APM data including the column Storage ID, 16020, are shown in 16030. Typically, the records are subsequently sorted and grouped by keys. The sorted and grouped data is shown in 16040. Next, the grouped data is indexed such that each unique key is assigned one index value. Doing so, adds a column Index, 16050, to the table of APM data. The distribution function is defined by the columns Key and Index in the table. The Mapping function is defined by the columns Index and Storage ID in the table. In the next step, the distribution function is approximated into a secondary function. Typically, the secondary function, 16060, is defined by fewer tuples of <key, index> values than the distribution function. Querying is shown next: In order to retrieve records of APM data from storage containers in a database, the secondary function maps the specified key, 16070, to an index value. As approximating the distribution function by the secondary function may introduce an error, the error is considered by typically providing a range of index values. Next, the mapping function maps said index value to a list of storage IDs of storage containers. Subsequently, records from storage containers identified by one or more storage IDs in the list of storage IDs are retrieved, 16080, and displayed, output or otherwise used in subsequent steps, 16090.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for storing application performance monitoring (APM) data in a database, the computer-implemented method comprising:
- receiving, by a computer-processor, data records of APM data from a plurality of computing entities, where each data record is associated to a key of a plurality of keys;
- storing, by the computer-processor, the data records in storage containers in the database, where each record is stored in one storage container and each storage container is identified by a unique storage identifier;
- assigning, by the computer-processor, a unique index value of a plurality of index values to each unique key;
- defining, by the computer-processor, a distribution function mapping the keys to the index values, where the distribution function is represented as a set of tuples each with a corresponding key and index value;
- generating, by the computer-processor, a secondary function to approximate the distribution function;
- defining, by the computer-processor, a mapping function to map the index values to lists of storage identifiers; and
- in response to a request to retrieve data records for a specified key or range of keys, querying the database to identify a list of storage identifiers based on the secondary function and the mapping function and retrieving the data records for the specified key or range of keys from one or more storage containers identified in the list of storage identifiers.

2. The computer-implemented method of claim 1, wherein:
the method further comprises
- sorting, by the computer-processor, the data records by the keys and grouping sets of the data records having the same key into groups of APM data; and
- assigning the unique index value includes assigning the unique index value to each group of APM data, where the index value is incremented between each of the groups of APM data.

3. The computer-implemented method of claim 1 or 2, wherein the list of storage identifiers includes one storage identifier.

4. The computer-implemented method of any one of the preceding claims, wherein:
- the data records of APM data originate at the computing entities;
- each computing entity is identified by a unique entity identifier; and
- the keys are entity identifiers for the computing entities,
wherein preferably the data records include at least one of log lines, monitoring data or metric data.

5. The computer-implemented method of any one of the preceding claims, wherein:
- the data records of APM data comprise metric data representing performance metrics of the computing entities; and
- the keys are numerical values in the metric data.

6. The computer-implemented method of any one of claims 1 to 4, wherein:
the keys of data records of APM data are sortable, non-numerical values.

7. The computer-implemented method of any one of the preceding claims, wherein generating the secondary function to approximate the distribution function includes generating the secondary function such that, for the keys, the index value of the distribution function at a corresponding key is given by the secondary function at said key plus or minus a defined error.

8. The computer-implemented method of claim 7, wherein generating the secondary function includes generating a piecewise linear spline function to approximate the distribution function, which approximates the distribution function by minimizing a number of spline segments of the piecewise linear spline function while maintaining the defined error, preferably wherein the piecewise linear spline function is generated by a Greedy-Spline-Corridor method.

9. The computer-implemented method of claim 7, wherein the defined error is dynamically adjustable based on at least one of a desired accuracy of the approximation or a maximum number of spline points.

10. The computer-implemented method of claim 7, wherein generating the secondary function includes generating one linear function to approximate the distribution function with a Least-Mean-Square approximation, which minimizes the sum of squared errors for the keys between the distribution function and the linear function.

11. The computer-implemented method of any one of the preceding claims, wherein querying the database to identify the list of storage identifiers includes:
- mapping, with the secondary function, the specified key or range of keys to an approximate index value or a range of approximate index values; and
- mapping, with the mapping function, the approximate index value or the range of approximate index values to the list of storage identifiers,
preferably wherein:
- querying the database to identify the list of storage identifiers includes point-querying to identify the list of storage identifiers by mapping, with the secondary function, the specified key to an approximate index value and mapping, with the mapping function, the approximate index value to the list of storage identifiers; or
- querying the database to identify the list of storage identifiers includes range-querying to identify the list of storage identifiers by mapping, with the secondary function, the specified range of keys to a range of approximate index values and mapping, with the mapping function, the range of approximate index values to the list of storage identifiers.

12. The computer-implemented method of any one of the preceding claims, further comprising updating the distribution function and the mapping function in response to a change in the data records.

13. The computer-implemented method of claim 12,
wherein:
- the secondary function is a piecewise linear spline function; and
- the method further comprises updating only a portion of the piecewise linear spline function affected by the change in the data records;
or wherein
the method further comprises updating the entire secondary function in response to the change in the data records.

14. The computer-implemented method of claim 12, further comprising updating a maximum allowable error between the updated distribution function and the secondary function approximating the original distribution function in response to the change in the data records.

15. The computer-implemented method of any one of the preceding claims, further comprising:
- receiving additional data records of APM data, where each additional data record is associated to a key of the plurality of keys; and
- writing the additional data records and the associated keys into a data buffer,
the method preferably further comprising:
- querying the data buffer for the specified key or range of keys to identify a list of storage identifiers; and
- combining query results from querying the database and query results from querying the data buffer.

16. A non-transitory computer-readable medium having computer-executable instructions that, upon execution of the instructions by a processor of a computer, cause the computer to:
- store data records of APM data from a plurality of computing entities in storage containers in a database, where each data record is associated to a key of a plurality of keys and is stored in one storage container, and each storage container is identified by a unique storage identifier;
- assign a unique index value of a plurality of index values to each unique key;
- define a distribution function mapping the keys to the index values, where the distribution function is represented as a set of tuples each with a corresponding key and index value;
- generate a secondary function to approximate the distribution function;
- define a mapping function to map the index values to lists of storage identifiers; and
- in response to a request to retrieve data records for a specified key or range of keys, query the database to identify a list of storage identifiers based on the secondary function and the mapping function and retrieve the data records for the specified key or range of keys from one or more storage containers identified in the list of storage identifiers.
